# EUROPEAN PATENT APPLICATION

(11) **EP 1 873 601 A1**
(43) Date of publication of application: **02.01.2008**
(21) Application number: 06730403.0
(22) Date of filing: 29.03.2006
(51) Int. Cl.: G05B 19/418

(54) **PROCESSING MANAGEMENT SYSTEM**

(30) Priority: 31.03.2005 JP 2005101099
(71) Applicant: Pentax Corporation, Tokyo 174-8639 (JP)
(72) Inventor: NAKAMURA, Kazuo, c/o PENTAX Corporation, Tokyo; 1748639 (JP)
(74) Representative: Schaumburg, Thoenes, Thurn, Landskron
(86) International application number: PCT/JP2006/306455
(87) International publication number: WO 2006/106729

(57) **Abstract**

A process management system comprises a management data generation means that generates management data. In regard to each relationship between processes, the management data includes product data corresponding to products in the previous process and partial object data corresponding to partial objects in the next process. The management data is formed of a single file in which the product data and the partial object data are associated with connection information representing connection between the previous process and the next process. A time when use of partial objects are suspended is stored, as use suspending time data, in the management data having the partial object data corresponding to the partial objects for which the use is suspended, and is stored, as use start time data, in the management data of partial objects which are other objects in the same process and are to be used next.

## Description

### TECHNICAL FIELD

The present invention relates to a process management system modeled as a structure in which a plurality of processes are ar ranged hierarchically by connecting at least one previous process to a next process successively.

### BACKGROUND OF THE INVENTION

Conventionally, when products are manufactured on a product line, various types of parts are mounted on a main part while the main part is conveyed along the product line from an upstream side to a downstream side. In Japanese Patent Provisional Publication No. 2001-56706A, the assignee of this application suggested a management system capable of simplifying manufacturing management and enhancing a function of traceability (i.e., a tracing function). In this publication, the assignee focuses attention on the fact that each part used by manufacturing equipment is previously manufactured as a product in another manufacturing equipment. In addition, the assignee regards a functional unit, where parts are collected and then a product (i.e., a part manufactured with each manufacturing equipment) is manufactured, as a "process", and expresses manufacturing of a final product as a hierarchical structure of a plurality of processes.

### DISCLOSURE OF THE INVENTION

In the management system described in the publication, it is required to manage articles (including products, parts and etc.) while executing processes on a box-by-box basis. Therefore, unless a process is finished for all the articles in a box being processed, it is impossible to execute a process for another box. However, when articles are actually subjected to a process, there may be a case where a certain process is suspended for executing a process for another box.

The present invention has been made in consideration of the above problem. It is therefore an object of the present invention to provide a process management system which has, for example, the above mentioned system configuration and which is configured such that even if a process for a certain box is suspended to execute a process for another box, management for the process for the boxes can be conducted smoothly.

To solve the above mentioned problem, there is provided a process management system modeled as a structure in which a plurality of processes are arranged hierarchically by successively connecting a previous process fo r producing, as products, articles to be used as partial objects in a next process with the next process for producing secondary products at least using each of the products produced in the previous process as a partial object. The process management system includes a management data generation means that generates management data. In regard to each relationship between processes, the management data includes product data which corresponds to products of the previous process and includes production start time data representing a time when production of the products in the previous process is started and production end time data representing a time when production of the products is finished, and partial object data which corresponds to partial objects of the next process and includes use start time data representing a time when use of partial objects in the next process is started and use end time data representing a time when use of the partial objects is finished. The management data is formed of a single file in which the product data and the partial object data are associated with connection information representing connection between the previous process and the next process. A time when use of partial objects is suspended is stored, as use suspending time data, in the management data having the partial object data corresponding to the partial objects for which the use is suspended, and is stored, as the use start time data, in the management data of partial objects which are other objects in the same process and are to be used next.

### BRIEF DESCRIPTION OF THE DRAWINGS

[Fig. 1] Fig. 1 is an illustration showing a moving path of a box moving between processes according to an embodiment of the invention.
[Fig. 2] Fig. 2 schematically shows each process and relationship between processes according to the embodiment of the invention.
[Fig. 3] Fig. 3 is an illustration showing a configuration of a management system according to the embodiment of the invention.
[Fig.4] Fig. 4 is an illustration showing a configuration of a server according to the embodiment of the invention.
[Fig. 5] Fig. 5 is an illustration showing a configuration of a terminal according to the embodiment of the invention.
[Fig. 6] Fig. 6 is a flowchart illustrating a management data update process according to the embodiment of the invention.
[Fig. 7] Fig. 7 is an explanatory illustration of management data corresponding to the flowchart (S₁-S₃) of Fig. 6 according to the embodiment.
[Fig. 8] Fig. 8 is an explanatory illustration of management data corresponding to the flowchart (S4-S6) of Fig. 6 according to the embodiment.
[Fig. 9] Fig. 9 is an explanatory illustration of management data for a box a1 which is formed finally in the embodiment.
[Fig. 10]Fig. 10 is a graph illustrating a relationship between each box and time defined when products are manufactured in a process C using parts from processes A and B.
[Fig. 11] Fig. 11 illustrates management data Dₐ₂ at a time T₁₁.
[Fig. 12] Fig. 12 illustrates management data Dₐ₂ and D_{b1} at a time T₁₂.
[Fig. 13] Fig. 13 illustrates management data Dₐ₂, D_{b1} and D_{c1} at a time T₁₃.
[Fig. 14]Fig. 14 illustrates management data Dₐ₂, D_{b1}, D_{c1}, Dₐ₃ and D_{c2} at a time T₁₄.
[Fig. 15]Fig. 15 illustrates management data Dₐ₂, D_{b1}, D_{c1}, Dₐ₃ and D_{c2} at a time T₁₅.

### REFERENCE TO SIGN

- 1: Server
- 2: PC
- 3A-3F: Terminal
- 11: CPU
- 13: HDD
- 31: PCL
- 33: BARCODE READER
- a1: BOX

### BEST MODE FOR CARRYING OUT THE INVENTION

A management system according to the embodiment is a system for managing the entire product line including a plurality of processes. The term "process" as used herein means a functional unit where collected parts are used to manufacture a product. That is, the "process" means a functional unit achieved by various types of manufacturing facilities such as a machine tool installed in a certain area in the manufacturing facilities such as a plant, various types of warehouses for storing parts and products, and workers who work for manufacturing through the manufacturing facilities and warehouses. The manufacturing of final products is modeled as a tree structure where these processes are connected successively in a hierarchical structure.

These processes are connected to each other in a predetermined order. In each process, a product is manufactured with parts carried from a previous process and then the product is carried toward a next process. For example, the parts and products are treated in a condition where several tens of or several hundreds of parts and products are stored in a box. Each box is provided with box identification for distinguishing one box from another box. More specifically, a barcode representing identification of a box is attached to a surface of each box. The identification may be information for identifying each box in regard to all of the processes. Alternatively, the identification may be information for identifying each box in regard to a single process.

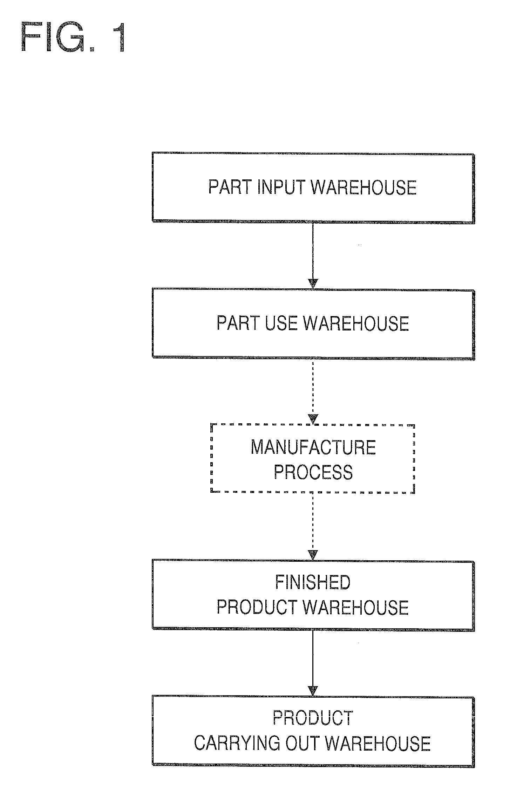

The various warehouses include a part input warehouse, a part use warehouse, a part output warehouse, a finished product warehouse, and a product carrying out warehouse. Hereafter, transfer of parts and products between warehouses in each process is explained with reference to Fig. 1.

When a box containing parts arrives at a certain process, a worker stores the box in the part input warehouse. Then, the worker selects a desired box from the boxes stored in the part input warehouse, and then transfers the selected box to the part use warehouse. Then, the worker manufactures a product with parts in the box transferred to the part use warehouse. Finished products are then stored successively in a box which is different from the box storing the parts. After finish of manufacturing, the worker stores the box containing the finished products in the finished product warehouse. For shipment, the worker selects required boxes from the boxes in the finished product warehouse and transfers the selected boxes to the product carrying out warehouse. It should be noted that the boxes transferred to the product carrying out warehouse are immediately carried out to a next process (in particular, to the part input warehouse for a next process).

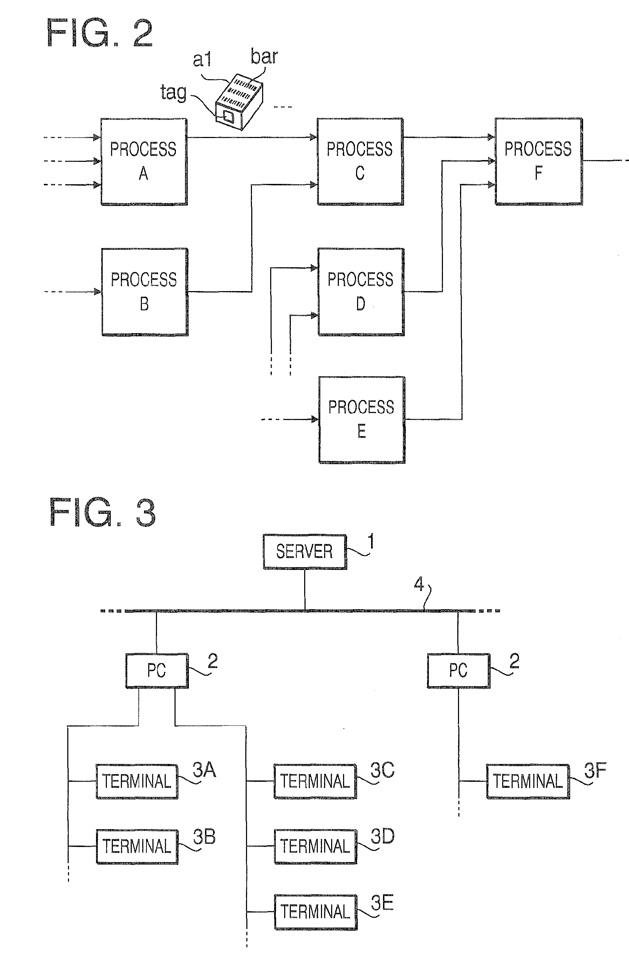

Fig. 2 schematically illustrates relationship between processes. In Fig. 2, six processes (a process A, a process B, a process C, a process D, a process E, a process F) of the plurality of processes are illustrated.

In Fig. 2, the process C receives products finished in the process A and products finished in the process B as parts for the process C. Then, the process C subjects the received parts to assembling or processing to finish them as products, and carries them to the process F.

The process F receives the products of the process C, the products of the process D, and the products of the process E to finish products of the process F. In this example, the products of the process F are regarded as final products of the entire manufacturing processes.

Next, a configuration of the management system for managing each process in the above mentioned manufacturing processes is described. Fig. 3 illustrates an example of a configuration of the management system according to the embodiment. The management system according to the embodiment has a server 1, a plurality of personal computers (hereafter, abbreviated as PC) 2 connected to the server 1 through a LAN 4 having a configuration as a network, and a plurality of terminals 3A to 3F connected to the PC 2. The terminals 3A to 3F are provided for the processes A to F, respectively. It should be understood that the configuration of the management system is not limited to one described above.

Hereafter, the server 1, the PC 2, and the terminals 3A to 3F are explained in detail.

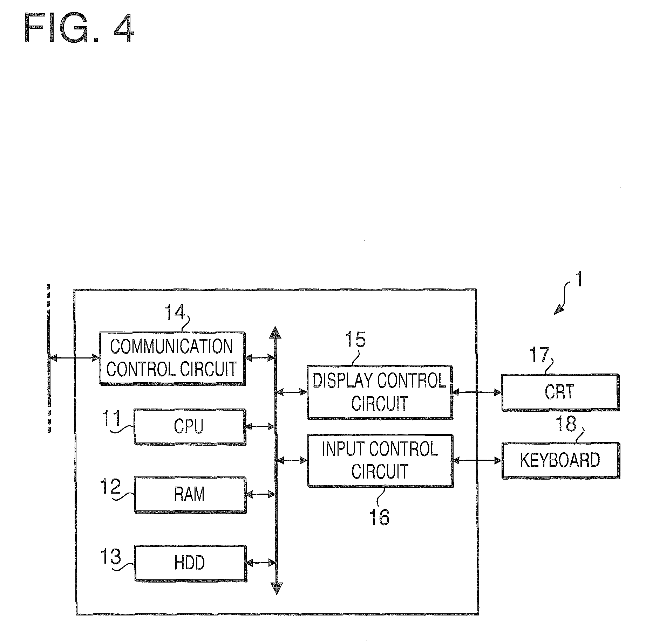

Fig. 4 illustrates a configuration of the server 1. As shown in Fig. 4, the server 1 has a CPU (Central Processing Unit) 11, a RAM (Random Access Memory) 12, an HDD (Hard Disk Drive) 13, a communication control circuit 14, a display control circuit 15, and an input control circuit 16, which are connected to each other via a bus. Further, the server 1 has a CRT 17 connected to the display control circuit 15, and a keyboard 18 connected to the input control circuit 16. The server 1 is connected to the LAN 4 through the communication control circuit 14.

In the HDD 13, various programs including an operating system and a database program has been stored in advance. In the HDD 13, data associated with a link representing connection between processes is also stored as management data which is described later. The term link as used herein means connection information which exists between process in the management system and is used for connecting processes with each other while associating them with each other. In the embodiment, the link corresponds to box identification information.

The CPU 11 reads a program store in the HDD 13 and loads the program on a certain area of the RAM 12. Further, the CPU 11 outputs necessary information for a worker by controlling the display control circuit 15 to display an image on the CRT 17. When the user conducts an input operation through the keyboard 18, the CPU 11 detects the input operation through the input control circuit 16. As described in detail below, if deficiencies are found in the manufactured products, the worker is able to instruct the server 1 to trace the defective products by inputting a predetermined command through the keyboard 18.

Each PC 2 has substantially the same configuration as the server 1. The PCs 2 are connected to the server 1 via the LAN 4. Each PC 2 is a device configured to control terminal devices connected thereto. For example, the PC 2 on the left side in Fig. 2 controls the terminals 3A to 3E, and is connected to these terminals via the LAN 4.

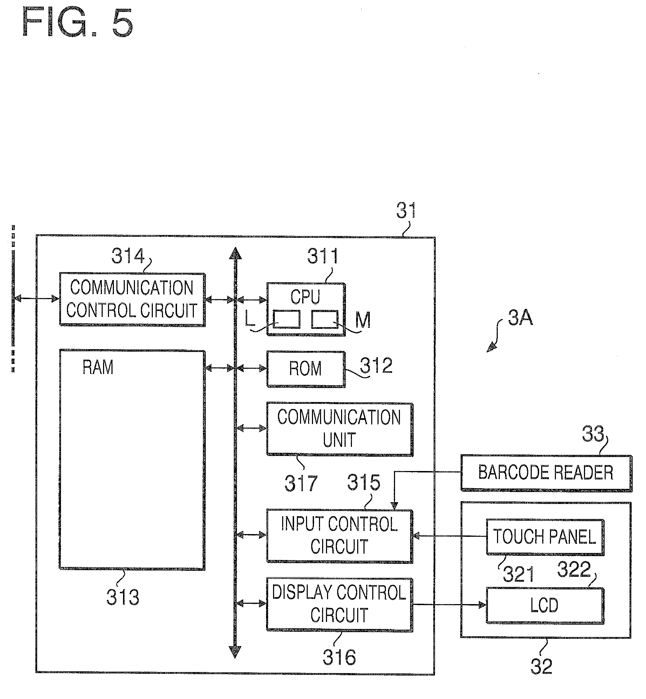

Fig. 5 illustrates a configuration of the terminal 3A. Since other terminals 3B to 3F have the same configuration as that of the terminal 3A, the terminal 3A is explained and explanations of the terminals 3B to 3F are omitted. As shown in Fig. 5, the terminal 3A has a programmable logic controller (hereafter, abbreviated as PLC) 31, a display input device 32, and a barcode reader 33.

The PLC 31 has a CPU 311, a ROM (Read Only Memory) 312, a RAM 313, a communication control circuit 314, an input control circuit 315, a display control circuit 316, and a communication unit 317. The CPU 311 includes a timer M functioning as a clocking means therein. The CPU 311 is able to obtain time (year, month, day, hour, minute, second) from the timer M. Further, the CPU 311 includes a counter L which counts a use time of a part or a manufacturing time of a product. In the ROM 312, various programs such as a database program have been stored in advance.

The display input device 32 has a touch panel 321 and a liquid crystal panel (hereafter, abbreviated as an LCD) 322. The touch panel 321 is placed on the screen of the LCD 322, and is connected to the input control circuit 315 of the PLC 31. The LCD 322 is connected to the display control circuit 316 of the PLC 31.

The barcode reader 33 is used to read the box identification information (e.g., a barcode bar in Fig. 2) attached, as a form of a barcode, to a box containing parts/products. The barcode reader 33 is connected to the input control circuit 315 of the PLC 31.

The CPU 311 of the PLC 31 loads a program stored in the ROM 312 to a predetermined area of the RAM 313 to execute the program. The CPU 311 controls the display control circuit 316 to display an image on the LCD 322 of the display input device 32. In the image, a carrying in button, a use start button, a manufacture start button, a use end button, a manufacture end button, a carrying out button, a work suspending button, a work restart button are included. The carrying in button is a button to be pressed when parts have been carried in a process. The use start button is a button to be pressed when use of the parts is started. The manufacture start button is a button to be pressed when manufacturing of products is started. The use end button is a button to be pressed when use of the parts is finished. The manufacture end button is a button to be pressed when the manufacture of products is ended. The carrying out button is a button to be pressed when the products are carried to a next process. The work suspending button is a button to be pressed when use of the parts or the manufacture of products is suspended. The work restart button is a button to be pressed when the suspended use of parts or the suspended manufacture of products is restarted.

The worker is able to conduct an input operation by pressing the button displayed on the LCD 322. That is, the touch panel 321 located on the screen of the LCD 322 is able to detect the pressed position on the screen by the worker, and to transmit a signal representing the pressed position to the input control circuit 315 of the PLC 31. Further, the CPU 311 is able to detect the pressed position on the screen by the worker through the input control circuit 315, and to recognize which of the positions of the buttons on the screen coincides with the detected position.

When the worker causes the barcode reader 33 to read a barcode bar, the barcode reader 33 obtains barcode data corresponding to the barcode bar, and transmits the obtained data to the input control circuit 315 of the PLC 31. The PLC 31 stores temporarily the obtained data in the RAM 313.

The terminals 3A to 3F configured as above are connected to the LAN 4 via the communication control circuit 314. The data stored temporarily in the RAM 313 is written in the HDD 13 of the server 1 through the PC 2 and the LAN 4.

To each box storing parts/products, an IC tag having an antenna and a memory is attached. The ID tag communicates with the communication unit 317 of the PLC 31 through the antenna, and thereby receives various types of data transmitted therefrom and accumulates the data in the memory.

Next, an actual flow of parts/products in each process and data processing in the management system are explained. As described above, between the processes, parts/products are treated in a condition where the parts/products are stored in a box (i.e., a certain number of parts/products are gathered).

The management system executes each process while associating each box with a unit of management data (one file). Each of pieces of management data is processed by the database program of the server 1 and the database program in each of the terminals 3A to 3F.

The management data is data associated with the box identification information of a box transferred between two processes. In the box, products of a process (previous process) are stored. Contents of the box are treated as parts in a next process. Therefore, in the management data, data regarding a previous process, i.e., data (previous process data) defined when articles in the box are regarded as products, and data regarding a next process, i.e., data (next process data) defined when the articles in the box are regarded as parts are included.

The previous process data includes product process name data, product box content data, product manufacture start time data, product manufacture end time data, product environmental condition data, product carrying in time data, product carrying out time data, product operator data, and product defect information. The product process name data is data representing a name of a process where the products are manufactured. The product box content data is data representing contents of the box (i.e., representing whether the box contains nondefective products or defective products). The product manufacture start time data is data representing the time when the manufacturing of products is started. The product manufacture end time data is data representing the time when the manufacturing of products is finished. The product environmental condition data is data representing an environmental condition such as humidity during the manufacturing. The product carrying in time data is data representing the time when the products are carried in the finished product warehouse. The product carrying out time data is data representing the time when the products are carried to a next process. The product operator data is data regarding a worker who is in charge of manufacturing the products. The product defect information is data representing defective products occurred during the manufacturing of products. The product manufacture time data is data representing the time during which the worker manufactured the products.

It is understood that the product process name data can be replaced with data representing a name of a process where the products are stored in the box. The product manufacture start time data can be replaced with data representing the time when storing of the products into the box is started.

The above mentioned product defect information includes various types of data. This data includes product pass number data, product failure number data, product pending number data, product rework number data, defective process name group data, part group-specific defect number data, defective product item data, and item-specific defective product number data. The product pass number data is data representing the number of products manufactured as nondefective products in a process. The product failure number data is data representing the number of defective products in the process. The product pending number data is data representing the number of products of which pass or failure is unclear in the process. The product rework number data is data representing the number of products which can become nondefective products by an easy rework. The defective process name group data represents a process name group where parts, used when defectives are produced in the process, are manufactured. The part group-specific defect number data is data representing the number of defective products classified by a part group when the defectives are produced. The defective product item data is data of an item representing a factor of the defectives of the products. The item-specific defective product number data is data representing the number of defective products classified by the item.

The next process data includes, for example, part process name data, part use start time data, part use end time data, part carrying in time data, part preparation time data, part user data, and part defect information. The part process name data is data representing a name of a process where parts are used. The part use start time data is data representing the time when use of the parts is started. The part use end time data is data representing the time when use of the parts is finished. The part carrying in time data is data representing the time when the parts are carried in the part input warehouse. The part preparation time data is data representing the time when the parts are carried in the part use warehouse. The part user data is data regarding the worker who used the parts. The part defective information is data regarding defectives during use of the parts.

The part process name data can be replaced with data of a name of a process where parts are unpacked from a box. The part use start time data can be replaced with data representing the time when unpacking of the parts from the box is started. The part use end time data can be replaced with data representing the time when the unpacking of the parts from the box is finished.

The above mentioned part defect information includes various types of data. This data includes part pass number data, part failure number data, defective part item data, and item-specific defective part number data. The part pass number data is data representing the number of parts used as nondefectives in the process. The part failure number data is data representing the number of parts judged to be defectives in the process. The defective part item data is data of an item representing a factor of failure of the parts. The item-specific defective part number data is data representing the number of defective parts for each item.

By thus obtaining the product defect information and the part defect information, a manager side is able to plan a detailed manufacturing schedule of a process while also considering the percentage of defectives, to predict occurrence of failure, to treat preferentially the process where the defects are found, and to achieve early detection of the defectives.

When the articles (parts/products) are transferred in each process or between processes, the management data is updated in the management system in accordance with the flow of the articles.

For example, when attention is given to the process C in Fig. 2, the products shipped from the process A are received by the process C as parts for the process C, and the products shipped from the process B are received by the process C as parts of the process C. In this case, the product groups manufactured in the process A are carried toward the process C in a condition where the product groups are assigned predetermined box identification information (a1, a2, a3···) provided as barcodes, for example. Hereafter, the box assigned the box identification information "a1" is abbreviated as "box a1" (boxes assigned other types of box identification information are similarly abbreviated).

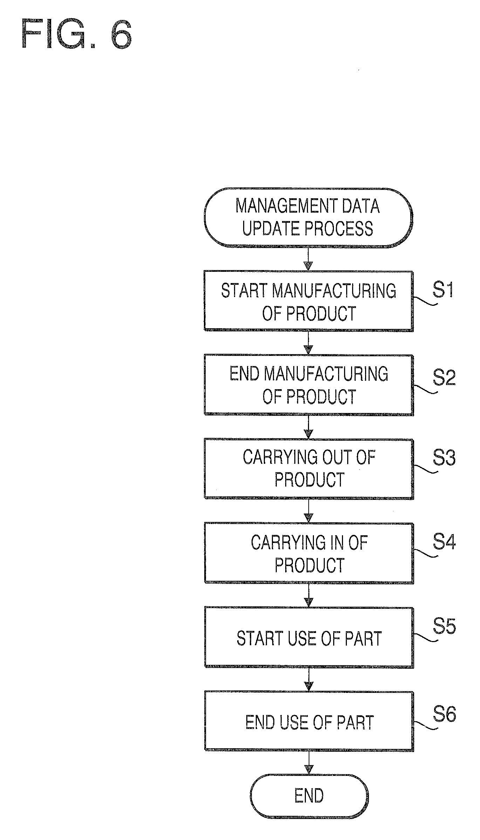

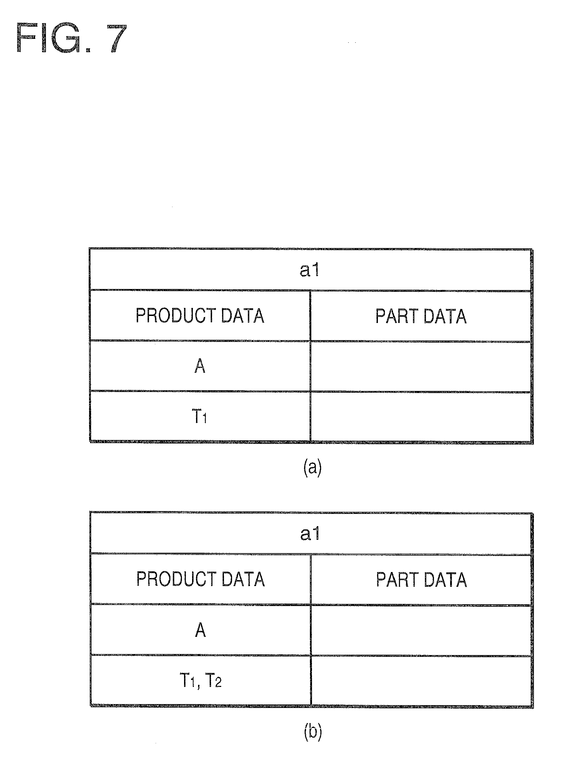

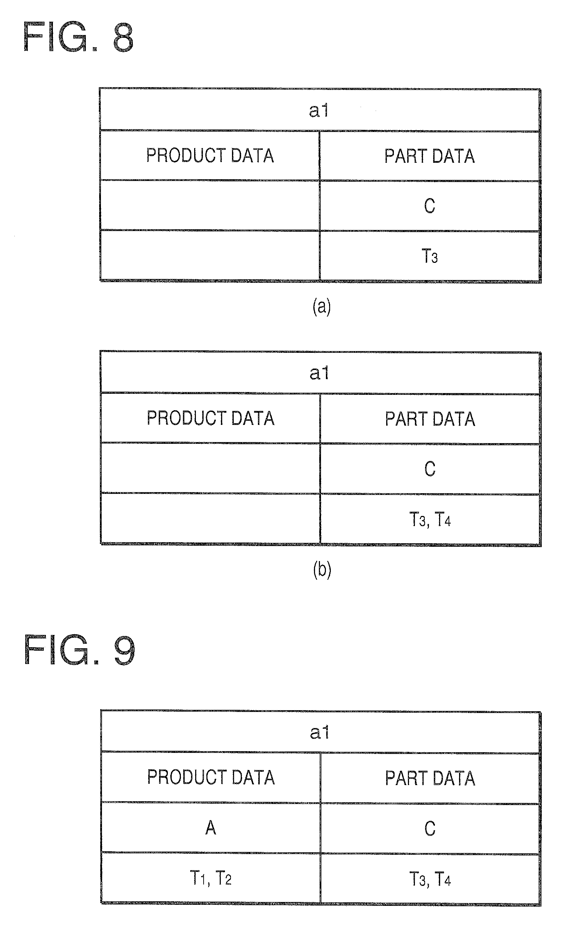

Fig. 6 is a flowchart illustrating a management data update process according to the embodiment. Fig. 7 shows explanatory illustrations which correspond to the flowchart (S1-S3) of Fig. 6 and which explain the management data according to the embodiment. Fig. 8 shows explanatory illustrations which correspond to the flowchart (S4-S6) of Fig. 6 and which explain the management data according to the embodiment. Fig. 9 is explanatory illustrations for explaining the management data generated through the process of S1-S6. Hereafter, an example of an update process (an update process for the management data D regarding the box a1) for management data according to the embodiment is explained with reference to Figs. 6 to 9. Hereafter, the management data D for the box a1 is abbreviated as "management data Dₐ₁" (the management data D for other boxes are similarly abbreviated).

When manufacture of products are started in the process A (S1), the worker first selects a box storing parts to be used from now on and a box in which products manufactured with the parts are to be stored. More specifically, the worker selects a box from each of box groups storing articles which are treated as parts in the process A, and uses the barcode reader 33 to read a barcode attached thereto. Further, the worker selects a box from a box group for storing the products manufactured in the process A, and uses the barcode reader 33 to read a barcode attached to the box. Here, only the box a1 of a box group storing the products manufactured in step A is explained for the sake of simplicity, and explanations for other boxes are omitted. Since a processing example of the box a1 storing parts is explained later, an update process for the management data regarding a box group storing parts is not explained here.

To the box a1, a barcode bar including data (the process A in this case) of a name of a process where manufactured products are stored and data (the product box content data which represents nondefective products in this case) indicating which of the nondefective product, defective product, and unclear product the box contains is attached. The data read by the barcode 33 is stored in the RAM 313 of the terminal 3A.

The product process name data (hereafter, referred to as "A") is equal to the part process name data (described later) assigned to the box storing the articles treated as parts in the process A. Therefore, into the management data Dₐ₁ including the product process name data, "the process C" is included as the part process name data.

When the above mentioned data is inputted to the terminal 3A through the barcode reader 33, the worker operates the touch panel 321 to further input data to the terminal 3A. The data inputted here includes the product operator data, the product environmental condition data, and the product manufacture start time data. Specifically, the product manufacture start time data is a time of the timer M stored in the RAM 313 when the manufacture start button, is pressed. Hereafter, "T₁" is assigned to the product manufacture start time data for the sake of convenience. When the manufacture of products are started in the process A, the product process name data "A" and the product manufacture start time data T₁ are stored in the RAM 313 (see Fig. 7(a)). Considering the input of the product operator data and the product environmental condition data as a trigger, it is possible to obtain the time when these pieces of data are inputted to the terminal 3A through the internal timer, and to store it in the RAM 313 as the product manufacture start time data T₁. The product operator data is not required each time the work is conducted. Input of the product operator data is required when the worker starts to use the terminal 3A. However, unless a new input is provided in the subsequent processes, the same product operator data is used successively.

The manager side is able to recognize the ability of the worker in charge of the process A to manufacture the product through the product operator data. As a way of recognizing the ability, a comparison with the product operator data in another process or the part user data in another process can be listed. The manager side is able to recognize the speed of the manufacturing of products for each worker. For example, the speed of the manufacturing of products can be obtained by the number of manufactured products per a unit of time in each process based on information obtained from the management data. If a product which is judged to be a nondefective product in the process A is judged to be a defective part in the process C, there is a possibility that the defective/nondefective judgment in the process A or in the process C is an error. When an error in the defective/nondefective judgment is found after the later investigation, the manager side is able to identify the worker who made a mistake. Since it is possible to manage attendance of the worker by utilizing the product operator data, the manager side is able to urge the worker to enhance the ability. It is also possible to judge whether the amount of work is appropriate based on working hours or the number of manufactured products of the worker. If the speed of the manufacturing of products decreases extremely, it is possible to judge whether the worker is in poor physical condition.

The product environmental condition data is data for notifying the manager of a condition (e.g., temperature or humidity) measured when a product is judged to be defective or nondefective. The manager side is able to analyze the factor of the defect (the condition of temperature or humidity) based on the product environmental condition data.

The product manufacture start time data T₁ and various types of time data which are described later are data used for analysis of the number of manufactured products per a unit of time, trace information, a lead time, and a failure analysis.

When the product process name data "A" and the product manufacture start time data T₁ are inputted to the terminal 3A, the worker starts to manufacture products in the process A. Each time the finished product is placed in the box a1, the worker inputs the condition of the product to the RAM 313 through the touch panel 321. The term condition of the product as used herein relates to the defectives occurred during the manufacture of products. The data concerning the defectives inputted to the terminal 3A includes , for example, the product pass number data, the product pending number data, the product rework number data, the defective process name group data, the part group-specific defect number data, the defective product item data, and the item-specific defective product number data. The box a1 is a box for storing nondefectives (products to be used as parts in the process C). Therefore, each time the worker places a product in the box a1, the worker operates the touch panel 321, so that the number of passed products (nondefectives) can be counted.

If the box a1 is a box for storing defectives, the worker executes a certain mode for processing defectives on the terminal 3A so that the product failure number data, the defective process name group data, the part group-specific defect number data, the defective product item data, and the item-specific defective product number data are inputted. If the box a1 is a box for storing products of which pass or failure is unclear, the worker executes a predetermined process for processing the products of which pass or failure is unclear on the terminal 3A, and inputs the product pending number data to the terminal 3A. If the box a1 is a box for storing reworked parts, the worker executes a predetermined process for processing reworked parts on the terminal 3A, and inputs the product rework number data to the terminal 3A.

When the manufacturing of products (including a work for storing products) for the box a1 is finished (S2) and the manufacture end button is pressed by the worker through the touch panel 321, the time of pressing is stored in the RAM 313 as the product manufacture end time data (hereafter, the product manufacture end time data is assigned "T₂"), and the total number of passed products is stored in the RAM 313 as the product pass number data. (see Fig. 7(b)).

The manager side is able to figure out the number of manufactured products per a unit of time based on the product manufacture end time data T₂, the product manufacture start time data T₁, the product pass number data, the product failure number data, the product pending number data, and the product rework number data.

When the manufacturing of products in the process A is finished, the box a1 is carried in the finished product warehouse as a stock. At this moment, the product carrying in time data is inputted to the RAM 313. If the latest time data of the management data Dₐ₁ is the product carrying in time data, this means that the box a1 is stored in the finished product warehouse. That is, the product carrying in time data is also data for notifying the manager of the current position information of the box a1.

If the process C requests the manufactured products from the process A, the worker of the process A transfers the box a1 stored in the finished product warehouse to the product carrying out warehouse. That is, the box a1 is carried to the process C (S3). At this moment, the worker obtains data (the product carrying out time data) of the time when the box a1 is transferred to the product carrying out warehouse (i.e., the time when the box a1 is transferred to the product carrying out warehouse) from the internal timer by pressing the carrying out button, and stores the data in the RAM 313.

The various types of data stored temporarily in the RAM 313 in the processes previously executed (S1-S3) are data obtained by considering articles in a box as products, and are data regarding the process A (hereafter, the data are abbreviated as box a1 product data). When the product carrying out time data is stored in the RAM 313, the box a1 leaves from the process A. Therefore, the management data Dₐ₁ storing only the box a1 product data is transmitted to the server 1 via the PC2 and the LAN 4, and is stored in the HDD 13 as one file. The management data Dₐ₁ is sent out through the communication unit 317 concurrently with transmission of the management data Dₐ₁ to the server 1, and is received by the IC tag of the box a1 to be stored in the memory of the IC tag.

In the IC tag, identification information for identifying IC tags is stored. Therefore, the terminal 3A is able to determine a destination of the management data by communicating with the IC tag and then referring to the identification information. To transmit the management data Dₐ₁ to the IC tag of the box a1, the terminal 3A communicates with each of boxes located within the communication range until communication with the IC tag of the box a1 is established. After communication with the IC tag of the box a1 is established, the terminal 3A transmits the management data Dₐ₁ to the IC tag of the box a1.

When the box a1 carried out of the process A is carried in the part input warehouse of the process C (S4), the worker uses the terminal C provided for the process C to proceed the updating process of the management data Dₐ₁. Since the terminal C has the same configuration as that of the terminal A, explanations of each component in the terminal C are omitted. In the following, each component of the terminal C is indicated by adding "c" to a symbol of a corresponding component of the terminal A.

When the box a1 is carried in the part input warehouse, data (part carrying in time data) of the time when the box a1 is carried in the part input warehouse is stored in the RAM 313 by pressing the carrying in button of the touch panel 321c of the terminal C. If the latest time data of the management data Dₐ₁ is the part carrying in time data, this means that the box a1 is stored in the part input warehouse. That is, the part carrying in time data is data for notifying the manager of the current position information of the box a1.

By calculating a difference between the part carrying in time data and the product carrying out time data, it is possible to know a lead time from the process A to the process C. For example, the lead time calculated here may be stored in the management data of the process A or C together with another data.

When the worker prepares the manufacturing work for products in the process C, the worker transfers the box a1 stored in the part carrying in warehouse to the part use warehouse. At this moment, the worker stores data (the part preparation time data) representing the time when the box a1 is transferred to the part use warehouse in the RAM 313c by operating the touch panel 321c.

When the manufacturing of products is started in the process C (S5), the worker of the process C first selects a box from among each box group (boxes storing the products manufactured in the process A or B) storing articles used as parts in the process C. Then, the worker uses the barcode reader 33c of the terminal 3C to read a barcode attached thereto. Further, the worker selects a box from among boxes in which products manufactured in the process C are to be stored. In the following, only the box a1 of boxes storing articles used as parts in the process C is explained for the sake of convenience, and explanations for other boxes are omitted. Explanations for an updating process for boxes storing products manufactured in the process C are made only for the box a1.

To the box a1, the barcode containing the part process name data (i.e., the process C), as well as the above mentioned box identification information a1, the product process name data "A", and the product box content data is attached. The data read by the barcode reader 33c is stored in the RAM 313c.

It should be noted that data represented by the part process name data (hereafter, referred to as "C") is the same as data represented by the product process name data given to a box for storing products manufactured in the process C. Specifically, both represent the "process C".

The worker inputs the above mentioned data to the terminal 3C through the barcode reader 33c. Next, the worker operates the touch panel 321c to further input data to the terminal 3C. For example, the data inputted here includes the part user data and the part use start time data. The part use start time data is the time of the timer M stored in the RAM 313 when the use start button is pressed. In the following, "T₃" is added to the part use start time data for the sake of convenience. As described above, when use of parts is started in the process C, the part process name data and the part use start time data T₃ have been stored in the RAM 313c (see Fig. 8(a)). It is also possible to store the time when the part user data is inputted to the terminal 3C, in the RAM 313c, as the part use start time data T₃, by regarding an input of the part user data as a trigger of the start of use of parts.

The manager is able to grasp the manufacturing performance of the worker in charge of the process C using the part user data as well as the above mentioned product operator data. In addition, the worker is able to judge whether the workload is appropriate based on the working hours and the number of products. It is also possible to judge whether the worker is in poor physical condition when the manufacturing speed of products decreases extremely.

When the part process name data "C" and the part use start time data T₃ are inputted to the terminal 3C, the worker starts to use the parts in the process C. Each time the worker picks up a part from the box a1, the worker inputs a condition of the part to the terminal 3C through the touch panel 321c. The condition of a part as used herein relates to defectives included in the parts stored in the box a1. For example, the data concerning defectives inputted to the terminal 3C includes the part pass number data, the part failure number data, the defective part item data, and the item-specific part number data.

When use of the parts in the process C is finished (S6) and the touch panel 321 is operated (i.e., the use end button is pressed) by the worker, the time of the operation is stored in the RAM 313c as the part use end time data (hereafter, represented by adding "T₄" to the part use end time data for the sake of convenience) (see Fig. 8(b)).

The part process name data "C", the part use start time data T₃, and the part use end time data T₄ stored temporarily in the RAM 313c are data defined when articles stored in a box are regarded as parts, and are data relating to the process C (hereafter, abbreviated as box a1 part data). Since the function of the box a1 (i.e., storage and movement of articles) is finished when the part use end time data T₄ is stored in the RAM 313c, the management data Dₐ₁ containing only the box a1 part data is transmitted to the server 1 via the LAN 4 so that the management data Dₐ₁ containing the box a1 product data previously transmitted is updated. Finally, the management data Dₐ₁ is recorded in the HDD 13 (see Fig. 9) as one file containing both of the box a1 product data and the box a1 part data.

If tracing is conducted in the management system according to the embodiment, the CPU 11 of the server 1 searches for time data indicating that the process is in the manufacturing (corresponding to time data between the time data T₁ and T₂) and time data indicating that the part is being used (e.g., data corresponding to the time between the time data T₃ and T₄). If an overlap occurs between the time of the management data which has product data associated with a certain process and indicates that products are in a manufacturing process and the time of the management data which has part data associated with the certain process and indicates that parts are being used, this means that the box associated with these pieces of management information is used concurrently in the same process during the overlapped time period. For example, if the time during which articles in the box a1 are used as parts and the time during which manufactured products are stored in the box c1 overlap with each other in the process C, this means that these boxes are used concurrently in the process C and are being associated with each other. If a period during which articles in the box b1 are used as parts and a period during which manufactured products are stored in the box c2 overlap with each other at least partially, this means that these boxes are used concurrently in the process C and are associated with each other. Therefore, by searching for the overlapped time, it is possible to determine which of boxes is used to provide parts for manufacturing products stored in a certain box. According to the management system of the embodiment, it is possible to identity an article on a box-by-box basis. Therefore, it is possible to achieve easy management and conduct accurate tracing in a complicated structure of processes in which processed are branched a plurality of times.

As described above, according to the management system of the embodiment, identification information is assigned to each box storing articles being transferred between processes. Each time a process associated with the box is executed, various types of data are collected in association with the identification information, and the collected data for each relationship between processes is stored in the server 1 as a file. Therefore, in the server 1, files associated with each link between processes are gradually accumulated. Consequently, if the manager wants to obtain information on connection between desired processes, the manager is allowed to obtain the information by only searching for a file.

According to a computer readable medium recording management data according to the embodiment, defect data defined when articles are regarded as products in the current process and defect data defined when the articles are regarded as parts in a next process are included in one file. Therefore, if inconsistency occurs between defect information regarding products and defect information regarding parts in the same file, it is possible to quickly judge that defectives are produced. By thus configuring the management data, it is possible to achieve quicker failure analysis.

If the manager side wants to manage the production line to manufacture products for a customer A in the morning and to manufacture products for a customer B in the afternoon, a situation where the manager is required to suspend a process (including use and manufacturing) for a box and to start a process for another process after noon arises. The suspending of a process means occurrence of a condition where a process for a box is not finished for all of the articles in the box. If the box contains parts and the use of the box is suspended, unused parts remain in the box.

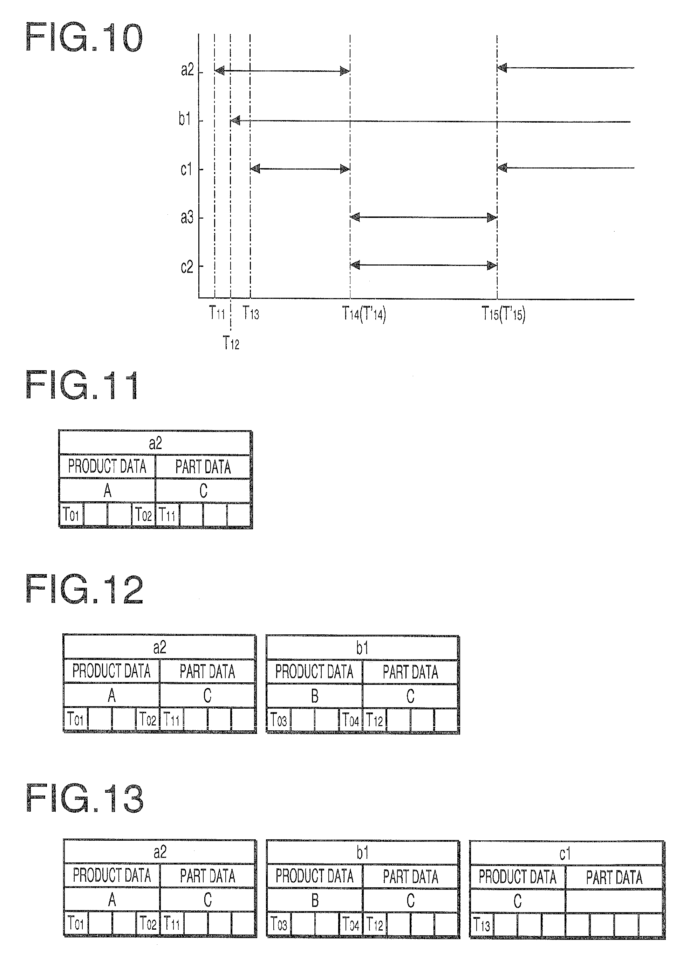

Fig. 10 is a graph illustrating a relationship between each box and time during the manufacturing of products in the process C using parts from the processes A and B. Symbols such as "a1" arranged in the vertical direction represent boxes, and "T₁₁"-"T₁₅" along the horizontal line represent times. The time "T₁₁" having the smallest numerical subscript represents the oldest time of all of these times. The larger the numerical subscript becomes, the newer the time having the numerical subscript becomes.

Fig. 11 illustrates the management data Dₐ₂ at the time T₁₁. In the process C, the worker reads a barcode of the box a2 with the barcode reader 33. Next, the worker presses the use start button on the touch panel 321 to start use of parts stored in the box a2. The time "T₁₁" of pressing is recorded in the management data Dₐ₂ as part use start time data of the box a2. "T₀₁" and "T₀₂" in the product data of the management data Dₐ₂ represent the product manufacture start time data and the product manufacture end time data in the process A, respectively.

Fig. 12 illustrates the management data Da₂ and the management data D_{b1} at the time T₁₂. When use of parts in the box a2 is started, the worker uses the barcode reader 33 to read a barcode of the box b1. Then, the worker presses the use start button of the touch panel 321 to start use of parts stored in the box b1. The time "T₁₂" of pressing is recorded in the management data D_{b1} as part use start time data of the box b1. "T₀₃" and "T₀₄" in the product data of the management data D_{b1} represent the product manufacture start time data and the product manufacture end time data in the process B, respectively.

Fig. 13 illustrates the management data Dₐ₂, D_{b1}, and D_{c1} at the time T₁₃. When the manufacturing of products using parts of the processes A and B is started, the worker uses the barcode reader 33 to read the barcode of the box c1. Next, the worker presses the manufacture start button to start storing the manufactured products in the box c1. The time T₁₃ of pressing of the button is stored in the management data D_{c1} as the product manufacture start time data of the box c1.

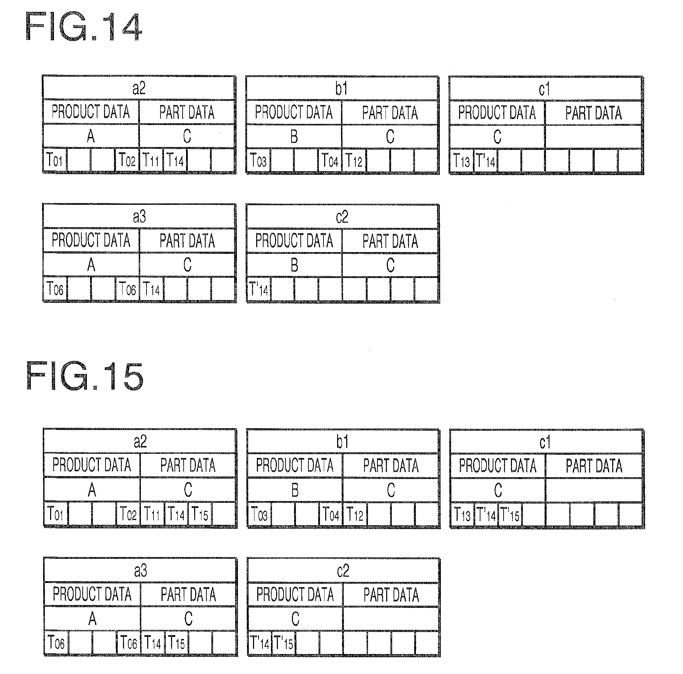

Fig. 14 illustrates the management data Dₐ₂, D_{b1}, D_{c1}, Dₐ₃ and Dₑ₂ at the time T₁₄. Assuming that the time T₁₄ is approximately equal to noon and the worker is required to manufacture products using a box an (n: integer) which is different from the box a2, in this case the worker uses the barcode reader 33 to read the barcode of the box a2. Next, the worker presses the work suspending button to suspend the use of parts stored in the box a2. At this moment, the time T₁₄ of pressing of the button is stored in the management data Dₐ₂ as the time (part use suspending time data) representing suspending of use of the box a2. Further, the worker uses the barcode reader 33 to read the barcode of the box a3. Then, the worker presses the use start button to start using the parts stored in the box a3. The time T₁₄ of pressing is stored in the management data Dₐ₃ as the part use start time data of the box a3. As a result, a process target box is changed from the box a2 to the box a3. Although the part use start time data of the management data Dₐ₃ is slightly older than the part use suspending time data of the management data Dₐ₂, these times can be regarded as representing substantially the same time. Therefore, these times of pressing are assigned the same symbol T₁₄.

To enhance easiness of management by matching paths of all the parts/products in each box, it is required to switch the box "cn" in use according to switching of the box "an" in use. In this case, storing of products in the box c1 is suspended and storing of products in another box c2 is started. Specifically, the worker uses the barcode reader 33 to read the barcode of the box c1, presses the work suspending button, and then suspends the manufacturing of products to be stored in the box c1. At this moment, the time T'₁₄ of pressing is stored in the management data D_{c1} as the product manufacture suspending time data. Further, the worker uses the barcode reader 33 to read the barcode of the box c2 and presses the use start time button. At this moment, the time T'₁₄ of pressing is stored in the management data D_{c2} as the product manufacture start time data of the box c2. As a result, a process target device is changed from the box c1 to the box c2. In this case, assuming that these times of pressing are substantially equal to each other, the same symbol T'₁₄ is assigned to these times of pressing. Since the time T'₁₄ is slightly older than the time T₁₄, the time T₁₄ and the time T'₁₄ are regarded as representing the same time in Fig. 10. Similarly to the times T₁₄ and T'₁₄, times T₁₅ and T'₁₅ are regarded as representing the same time.

If it is allowed that products manufactured using parts of the box a2 and products manufactured using parts of the box a1 are mixed in the box c1, there is no necessity to switch from the box c1 to another box cn.

Fig. 15 illustrates the management data Dₐ₂, D_{b1}, D_{c1}, Dₐ₃ and D_{c2} at the time T₁₅. Assuming that it is necessary to use the parts of the box a2 again to increase the number of products for the customer A, in this case the worker performs the reading of the barcode of the box a3, pressing of the work suspending button, reading of the barcode of the box a2, and pressing of the work restart button in this order. As a result, the time T₁₅ of pressing is stored in the management data Dₐ₃ as the part use suspending time data, and is stored in the management data Dₐ₂ as the part use restart time data. Then, a process target box switches from the box a3 back to the box a2.

A box for storing products also switches from the box c2 to the box c1. Therefore, the worker performs the reading of the barcode of the box c2, pressing of the work suspending button, reading of the barcode of the box c1, and pressing of the work restart button in this order. As a result, the time T'₁₅ of pressing is stored in the management data D_{c2} as the product manufacture suspending time data, and is stored in the management data D_{c1} as the product manufacture restart time data. Then, a process target box switches from the box c2 back to the box c1.

By thus storing data representing the suspending time or the restart time as the management data, it is possible to move to a process for another box even if the process is not finished for all of the articles in the box being processed. Therefore, it becomes possible to achieve a more flexible process where restrictions on the use of the management system are relaxed.

While explanations on the invention are given with reference to the above mentioned embodiment, the invention is not limited to the configuration particularly described in the embodiment, and variations regarding the embodiment can be made in various ways.

In another embodiment, it is possible to obtain the part use (product manufacture) suspending time data or the part use (product manufacture) restart time data without pressing the work suspending button or the work restart button. Hereafter, explanations are made in regard to the case where a process target box switches from the box a3 back to the box a2, for example.

When a process target box switches from the box a3 to the box a2, the worker executes a reading operation of the barcode of the box a2 without pressing the use end button of the touch panel 321. The terminal 3 judges that use of the box a2 has been suspended based on the fact that the latest time data in the management data Dₐ₂ corresponds to the part use suspending time data. Then, the worker stores the read time in the management data Dₐ₂ as the part use restart time data.

The barcodes of the box a2 and the box a3 contain information for enabling the terminal to recognize that the box stores parts from the process A. Based on this information, the terminal judges that the read barcode belongs to the box storing the parts from the process A. Further, the terminal judges that the box a3 stores the parts from the process A and is a box in use, based on the fact that the latest time data in the management data Dₐ₃ corresponds to the part use start time data. Based on these judgment results, the terminal judges that a box storing the parts from the process A to be used switches from the box a3 to the box a2. Then, the terminal stores the read time in the management data Dₐ₃ as the part use suspending time data. As a result, a process target box switches from the box a3 back to the box a2. According to such a configuration, a burden on the worker decreases considerably.

In another embodiment, it is possible to judge the type of a time (start, suspending, restart, and end) based on the number of pieces of time data contained in the management data. In this case, if two pieces of time data is contained in the management data of a certain box, the older time data is treated as the part use (product manufacture) start time data, and the newer time data is treated as the part use (product manufacture) end time data. If four pieces of time data are contained in the management data, the oldest time data is treated as the part use (product manufacture) start time data, the second oldest time data is treated as the part use (product manufacture) suspending time data, the third oldest time data is treated as the part use (product manufacture) restart time data, and the latest time data is treated as the part use (product manufacture) end time data. According to such an embodiment, it is unnecessary to conduct an operation (e.g., pressing of buttons) for associating each of pieces of time data to the type of time data.

In the above mentioned embodiment, an act for manufacturing a product while processing parts is defined as a process, and a cluster being transferred through processes is defined as a box. However, a system configured to quickly judge whether a possibility of a problem arises during movement of articles between processes and a system for tracing the problem can also be applied to other fields (e.g., distribution, an economy, and etc.) by replacing "article", "process", "product", "part" and "box" with other ones, respectively.

For example, the "article" may be replaced with a "tangible object" (e.g., the above mentioned parts and products or meat) or an "intangible" (e.g., an economy, management, or etc.). The "process" may be replaced with "processing" to be applied to various types of articles. The "product" may be replaced with a "produced object" produced in certain processing. The "part" may be replaced with a "partial object" used to make the produced object. The "box" may be replaced with a "cluster" being transferred through processes. By replacing the elements as described above, the management system according to the embodiment may be applied to various forms of process management systems for managing a tangible object such as meat and for managing an intangible corresponding to information for controlling an economy, management or distribution.

In an embodiment according to the invention, it is possible to record the time when the suspended use of partial objects is restarted, in the management data having the partial object data of the partial objects as the use restart time data, and to record the time in the management data of the partial objects which were used until a while ago, as the use suspending time data.

In an embodiment according to the invention, it is possible to record the time when production of products is suspended, in the management data having the product data of the products, as production suspending time data, and to record the time in the management data of products which are another products in the same process and are to be produced next, as production start time data. Further, it is possible to record the time when suspended production of products is restarted, in the management data having the production data of the products, as the production restart time data, and to record the time in the management data of products which are another products in the same process and were produced until a while ago, as the production suspending time data.

## Claims

1. A process management system modeled as a structure in which a plurality of processes are arranged hierarchically by successively connecting a previous process for producing, as products, articles to be used as partial objects in a next process with the next process for producing secondary products at least using each of the products produced in the previous process as a partial object, comprising:
a management data generation means that generates management data,
wherein, in regard to each relationship between processes, the management data includes:
product data which corresponds to products of the previous process and includes production start time data representing a time when production of the products in the previous process is started and production end time data representing a time when production of the products is finished; and
partial object data which corresponds to partial objects of the next process and includes use start time data representing a time when use of partial objects in the next process is started and use end time data representing a time when use of the partial objects is finished,
wherein the management data is formed of a single file in which the product data and the partial object data are associated with connection information representing connection between the previous process and the next process,
wherein a time when use of partial objects is suspended is stored, as use suspending time data, in the management data having the partial object data corresponding to the partial objects for which the use is suspended, and is stored, as the use start time data, in the management data of partial objects which are other objects in the same process and are to be used next.

2. The process management system according to claim 1,
wherein a time when the use of the partial object is restarted is stored, as use restart time data, in the management data having the partial object data corresponding to the partial objects for which the use is restarted, and is stored, as the use suspending time data, in the management data of partial objects which are other objects in the same process and were used previously.

3. The process management system according to claim 1 or 2,
wherein a time when production of products is suspended is stored, as production suspending time data, in the management data having the product data corresponding to the products for which the production is suspended, and is stored, as production start time data, in the management data of products which are other products in the same process and are to be produced next.

4. The process management system according to claim 3,
wherein a time when the production of the products is restarted is stored, as production restart time data, in the management data having the product data corresponding to the products for which the production is restarted, and is stored, as the production suspending time data, in the management data of products which are other products in the same process and were produced previously.
